# EUROPÄISCHE PATENTSCHRIFT

(11) **EP 0 555 532 B1**
(45) Veröffentlichungstag und Bekanntmachung des Hinweises auf die Patenterteilung: **12.06.1996**
(21) Anmeldenummer: 92119765.3
(22) Anmeldetag: 20.11.1992
(51) Int. Cl.: B60T 8/88

(54) **Verfahren zur Initialisierung eines elektronischen Regelsystems insbesondere in einem Kraftfahrzeug**
Process for initialisation of an electronic control system, particularly in a vehicle
Procédé pour initialiser un système de régulation électronique spécialement dans un véhicule automobile

(30) Priorität: 08.02.1992 DE 4203704
(43) Veröffentlichungstag der Anmeldung: 18.08.1993
(73) Patentinhaber: MERCEDES-BENZ AG, D-70327 Stuttgart (DE)
(72) Erfinder: Fischer, Jörg, Dipl.-Ing., W-7300 Esslingen (DE); Klein, Bodo, Dipl.-Ing., W-3013 Barsinghausen (DE)

(56) Entgegenhaltungen:
- EP-A- 0 465 793
- DE-A- 3 540 599
- DE-A- 3 624 456
- DE-A- 3 942 661
- GB-A- 2 142 175

## Beschreibung

Die Erfindung bezieht sich auf ein Verfahren mit den Merkmalen des Oberbegriffs des Patentanspruchs 1.

Bei elektronischen Steuergeräten, wie beispielsweise zur Ansteuerung von Rad(-druck)modulatoren eines elektropneumatischen Bremssystems (EPB) in einem Fahrzeug, ist es aus Gründen der Lagerung und der Logistik vorteilhaft, mehrere Funktionen in einem Baustein vorzusehen. Dies ist insbesondere dann von Vorteil, wenn entweder ein Übergang von einer Steuergeräteversion auf eine nächste erfolgen soll und die neue Version gegenüber der Vorgängerversion umfangreiche Änderungen aufweist, zu dieser aber abwärtskompatibel sein muß oder wenn beispielsweise in einem Fahrzeug mehrere im Hardwareaufbau gleiche elektronische Steuergeräte verbaut werden sollen, deren spezifische Funktionen von außen, ihrer Anwendung entsprechend festgelegt werden. In jedem Fall muß nach Einbau der Bausteine mit einem einmaligen Verfahren zur Initialisierung den elektronischen Steuergeräten eine spezifische Funktion oder Teilfunktion zugewiesen werden, um sie an den Einsatzort der angesteuerten Funktionsbausteine oder an die Systemvorraussetzungen anzupassen.

Ein Anwendungsbeispiel ist ein EPB in möglichst flexibler Ausführungsform, bei dem von einem primären Steuergerät, das im Fahrerhaus untergebracht sein kann, dezentral Radmodulatoren mit integrierter Regelelektronik (sekundäre Steuergeräte) über einen Datenbus (z.B. CAN) angesteuert werden. Da, wie oben beschrieben aus Kostengründen, gleiche Radmodulatoren eingebaut werden sollen, ist ein Verfahren zur Initialisierung anzuwenden, welches die Radmodulatoren ihrem jeweiligen Einsatzort zuordnet, z.B. am rechten Vorderrad, und gegebenenfalls eine spezifische Funktion zuweist.

Zur Initialisierung eines Steuergerätes sind verschiedene Verfahren bekannt, bei denen durch eine hardwaremäßige Beschaltung eine Auswahl unter verschiedenen, vordefinierten Funktionen getroffen werden kann. So besteht beispielsweise ein Verfahren darin, die Funktionsweise über von außen zugängliche Schalter auszuwählen, was aber den Nachteil hat, daß relativ häufig Fehler bei der Einstellung der Schalter auftreten und daß die Schalter hohe Kosten verursachen.

Aus der DE 36 24 456 A1 ist ein elektronisches System für ein Kraftfahrzeug bekannt, bei dem mehrere zu gleichartigen Aggregaten gehörige Steuergeräte mit einer zentralen Steuereinheit verbunden sind, welche bei Inbetriebnahme des Fahrzeugs die zum jeweiligen Aggregat gehörenden spezifischen Programmschritte und Festgrößen auswählt. Die Individualisierung der Steuergeräte kann dabei mit Hilfe einer Codierung erfolgen, die in einem Arbeitsspeicher des jeweiligen Steuergerätes abgelegt wird. In dieser Weise kann eine Zuordnung zwischen dem Steuergerät und dem fahrzeugspezifischen Aggregat individuell getroffen werden.

Aus der DE 39 42 661 A1 ist ein Verfahren zur Kommunikation zwischen einer Hauptstation, z.B. einer externen Fahrzeugdiagnostik- oder Prüfvorrichtung, und verschiedenen Unterstationen, z.B. in einem Kraftfahrzeug installierten elektronischen Steuereinheiten, bekannt. Dabei wählt die Hauptstation nacheinander jeweils eine Steuereinheit aus und überträgt einen diagnostischen Steuerbefehl an die ausgewählte elektronische Steuereinheit, um diese zu veranlassen, einen gewünschten Steuerungsvorgang auszuführen. Anschließend nimmt die Hauptstation rückübermittelte Daten von der ausgewählten elektronischen Steuereinheit auf, um zu vergleichen, ob die Antwortcharakteristik des ausgewählten Fahrzeugsystems einer Norm entspricht. Auf diese Weise wird die Diagnose einer Fehlfunktion in der ausgewählten elektronischen Steuereinheit ausgeführt.

Die Aufgabe der Erfindung besteht nun darin, ein gattungsgemäßes Verfahren zur Initialisierung eines elektronischen Regelsystems anzugeben, mit dem die sekundären Steuergeräte auf einfache und zuverlässige Weise an den Einsatzort der zugeordneten Funktionsbausteine angepaßt werden können. Ferner sollte es möglich sein, in einem weiteren Schritt programmgesteuert auch eine vom Einsatzort abhängige Funktion für das jeweilige sekundäre Steuergeräte festzulegen.

Diese Aufgabe wird mit den kennzeichnenden Merkmalen des Patentanspruchs 1 erfindungsgemäß gelöst. Besondere Ausgestaltungen und vorteilhafte Weiterbildungen sind durch die Merkmale der Unteransprüche gekennzeichnet. So sieht das Merkmal von Unteranspruch 4 vor, dem Steuergerät zugleich mit dem Einsatzort eine an den Einsatzort geknüpfte Funktionsweise zuzuweisen. Weiterhin sieht das Merkmal von Unteranspruch 5 vor, unterschiedliche Systemkonfigurationen während des Initialisierungsprozesses zu erkennen und gegebenenfalls unterschiedliche Regelstrategien zu aktivieren. Damit kann das elektronische Regelsystem auf unterschiedliche Fahrzeugtypen, beispielsweise solche mit vier Rädern oder solche mit sechs Rädern, die sich durch die Anzahl der Radmodulatoren und damit in ihrem Systemaufbau unterscheiden, angepaßt werden.

Weitere Einzelheiten und Vorteile gehen aus den Zeichnung und der sich hier anschließenden Beschreibung hervor. Es zeigen:
- Figur 1: ein Blockschema eines elektronischen Regelsystems mit externen Funktionsprüfgeräten zur Einsatzortdiagnose,
- Figur 2: ein Flußdiagramm zur programmgesteuerten Initialisierung.

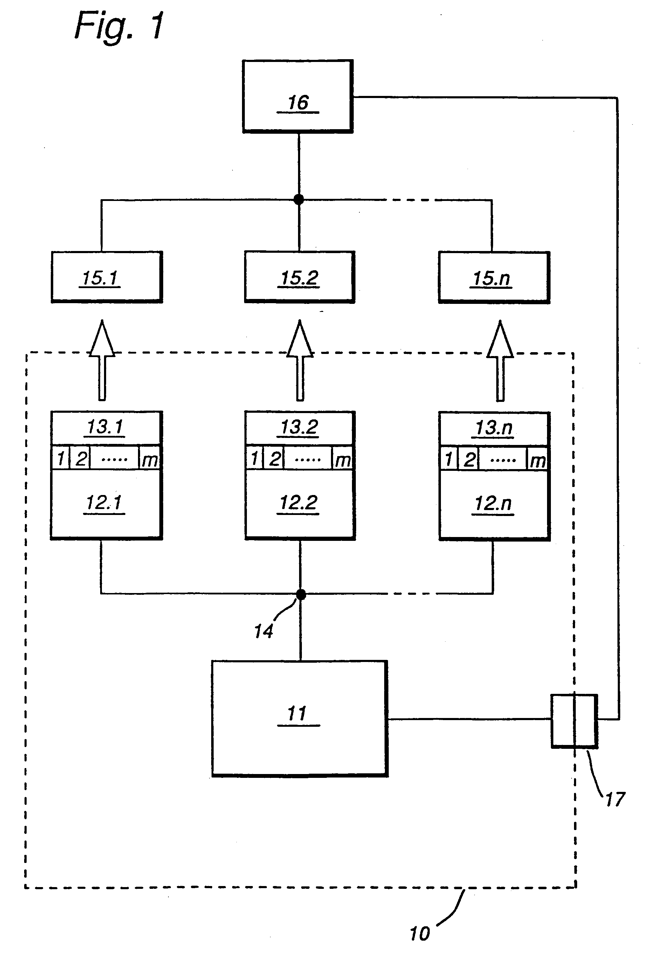

In der Figur 1 ist das elektronische Regelsystem 10 dargestellt, das aus einem primären Steuergerät 11 und n nachgeschalteten Funktionsbausteinen 13.1 bis 13.n mit jeweils einem integrierten sekundären Steuergerät aus 12.1 bis 12.n besteht. Jedes sekundäre Steuergerät kann in eine von m Funktionsweisen geschaltet werden, was im Verlauf der Initialisierung durchgeführt werden kann. Alle Steuergeräte, primäres und sekundäre, sind über ein Informationssystem 14, insbesondere einem Datenbus, miteinander verbunden. Die Aktionen der Funktionsbausteine 13.1 bis 13.n werden durch externe Funktionsprüfgeräte 15.1 bis 15.n registriert, die für das Beispiel eines EPBs Bestandteil eines Bremsrollenprüfstands sein können. Ein angeschlossener Diagnosecomputer 16 wertet die empfangenen Meldungen aus, indem er neben Werten wie z.B. Bremskraft und Drehzahlen auch den Einsatzort eines in Aktion getretenen Funktionsbausteins - eines Radmodulators im Falle des EPBs - über eine Diagnosesteckdose 17 an das primäre Steuergerät meldet. Ist kein Bremsrollenprüfstand vorhanden, kann die Einsatzortdiagnose auch durch das Werkstattpersonal getroffen und mittels eines externen, an die Diagnosesteckdose 17 angeschlossenen Servicetesters an das Steuergerät 11 übermittelt werden.

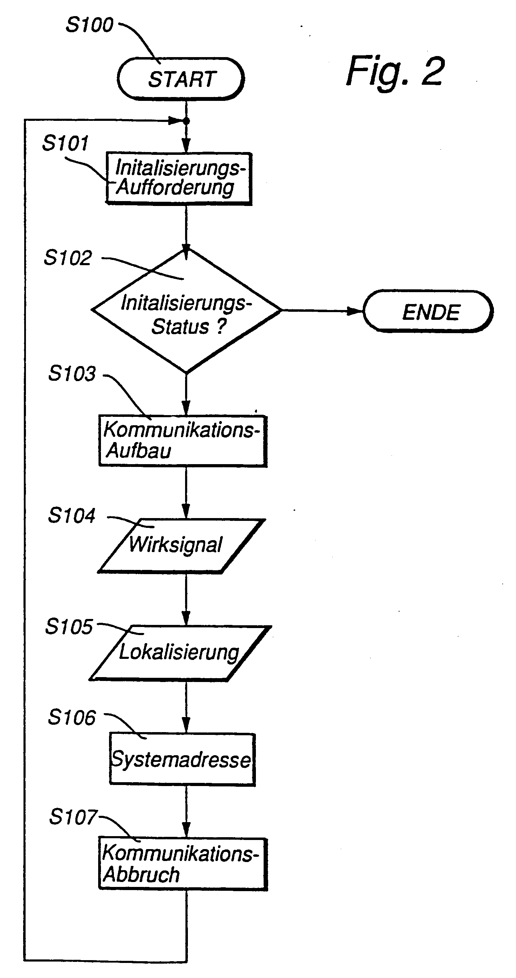

Anhand der Figur 2 wird der programmgesteuerte Ablauf der Initialisierung beschrieben, wie er erfindungsgemäß vorgesehen ist. Die Initialisierung geht in folgenden Schritten vonstatten:
S100: Über die Diagnosesteckdose 17 erhält das primäre Steuergerät 11 vom Bediener ein Signal zum Starten des Initialisierungsprogramms.
S101: Das primäre Steuergerät 11 sendet über das systeminterne Informationssystem 14 an alle sekundäre Steuergeräte 12.1 bis 12.n eine Aufforderung zur Initialisierung und Aussendung einer Initialisierungsadresse. Der Initialisierungsstatus eines jeden sekundären Steuergerätes ist durch einen Betriebszustand logisch "1" für bereits initialisiert und einen Betriebszustand "0" für noch nicht initialisiert charakterisiert. Nur die sekundären Steuergeräte mit Initialisierungstatus "0" antworten auf die Initialisierungsaufforderung mit der Aussendung einer beliebigen Initialisierungsadresse.
S102: Liegt nach einer Zeit T auf die Initialisierungsaufforderung noch keine Antwort auf dem Informationssystem 14 in Form einer Initialisierungsadresse vor, so wird der Initialisierungsprozeß für die sekundären Steuergeräte 12.1 bis 12.n beendet. Ein nicht initialisiertes sekundäres Steuergerät bewirkt, daß das elektronische Regelsystem 10 nicht in Betrieb genommen werden kann und der Initialisierungsprozeß fortgesetzt wird.
S103: Zwischen dem primären Steuergerät und dem sekundären Steuergerät 12.k, dessen Initialisierungsadresse als erste dem Informationssystem 14 vorliegt (k ε {1,...,n}), wird eine stabile Kommunikation aufgebaut, während die nicht erfolgreichen sekundären Steuergeräte mit Initialisierungsstatus "0" auf Warteposition gehen und auf die nächste Initialisierungsaufforderung warten.
S104: Das primäre Steuergerät 11 übermittelt dem sekundären Steuergerät 12.k, mit dem die Kommunikation aufgebaut wurde, ein vordefiniertes Wirksignal, welches eine entsprechende Aktion des zugeordneten Funktionsbausteines 13.k hervorruft, z.B. das Be- und Entlüften einer Bremse.
S105: Die Aktion des Funktionsbausteines 13.k wird von einem der Funktionsprüfgeräte 15.1 bis 15.n auf dem Prüfstand gemessen, im Diagnosecomputer das Meßsignal verarbeitet und der Einsatzort des Funktionsbausteins 13.k dem primären Steuergerät 11 über die Diagnosesteckdose 17 mitgeteilt. Bei der Initialisierung mit Servicetester muß der Bediener die Aktion des Funktionsbausteines 13.k, z.B. das Entlüftungsgeräusch der Bremse, orten und über den Servicetester die Lokalisierung dem primären Steuergerät 11 eingeben.
S106: Das primäre Steuergerät 11 ordnet diese Information in ihr internes Wirkschema ein und übermittelt dem sekundären Steuergerät 12.k eine auf den Einsatzort bezogene Systemadresse, die beispielsweise der Lokalisierung vorne und links entspricht. Die Systemadresse wird im sekundären Steuergerät 12.k nichtflüchtig eingetragen und dient zukünftig zur Adressierung desselben. Nach Zuweisung einer Systemadresse geht das sekundäre Steuergerät 12.k in den Betriebszustand mit Initialisierungsstatus "1" über. Gegebenenfalls kann an dieser Stelle mit der Auswahl einer der Funktionen des sekundären Steuergerätes eine Anpassung an den Einsatzort erfolgen und nichtflüchtig gespeichert werden.
S107: Die Initialisierung für dieses sekundäre Steuergerät 12.k ist abgeschlossen, und die Kommunikation mit dem primären Steuergerät 11 wird abgebrochen.

Rücksprung zu S101: Es ergeht eine neue Initialisierungsaufforderung an die verbleibenden, noch nicht initialisierten sekundären Steuergeräte. Erst wenn alle sekundäre Steuergeräte 12.1 bis 12.n initialisiert sind und auf die Initialisierungsaufforderung keine Initialisierungsadresse mehr im primären Steuergerät 11 eingeht, ist der Initialisierungsprozeß abgeschlossen und das elektronische Regelsystem 10 betriebsbereit.

Gegebenenfalls kann nach Abschluß der im primären Steuergerät 11 durchgeführten Zuordnungen, das primäre Steuergerät mit Hilfe der vorliegenden Information eine Differenzierung zwischen verschiedenen Systemkonfigurationen, z.B. die Anzahl der eingebauten Radmodulatoren, vornehmen und eine entsprechende Regelstrategie durch Auswahl einer vorgegebenen Funktion aktivieren.

Neben der Anwendung des erfindungsgemäßen Verfahrens auf ein EPB kann dieses unter anderem auch auf ein elektronisches Regelsystem zur Ansteuerung der Signal- und Scheinwerfereinrichtung in einem Fahrzeug verwendet werden, wobei die relaisgeschalteten Leuchten den Funktionsbausteinen entsprechen.

## Patentansprüche

1. Verfahren zur Initialisierung eines elektronischen Regelsystems, insbesondere in einem Kraftfahrzeug, bestehend aus einem primären Steuergerät (11) und mehreren nachgeschalteten, jeweils einem Funktionsbaustein zugeordneten sekundären Steuergeräten (12.1 bis 12.n), wobei alle Steuergeräte über ein Informationssystem, insbesondere einen Datenbus, Informationen austauschen können, wobei zur Durchführung des Verfahrens das primäre Steuergerät zu einer programmgesteuerten, sukzessiven Ausführung selektiver Initialisierungen aller sekundären Steuergeräte aktiviert wird, **dadurch gekennzeichnet**, daß jeweils ein Funktionsbaustein (aus 13.1 bis 13.n) zu einer vordefinierten Aktion angeregt wird, die mit Hilfe einer externen Einsatzortdiagnose lokalisiert wird, worauf der diskrete Einsatzort des Funktionsbausteines bzw. des zugeordneten sekundären Steuergerätes dem primären Steuergerät übermittelt wird.

2. Verfahren nach Anspruch 1, **dadurch gekennzeichnet**, daß das primäre Steuergerät (11) nach Übermittlung des Einsatzortes eines Funktionsbausteines (aus 13.1 bis 13.n) dem zugeordneten sekundären Steuergerät (aus 12.1 bis 12.n) eine auf den Einsatzort bezogenen Systemadresse zuweist.

3. Verfahren nach Anspruch 2, **dadurch gekennzeichnet**, daß in einem sekundären Steuergerät (aus 12.1 bis 12.n) eine zugewiesene Systemadresse in einen nichtflüchtigen Speicher eingetragen wird.

4. Verfahren nach Anspruch 1, **dadurch gekennzeichnet**, daß den sekundären Steuergeraten (12.1 bis 12.n), bei denen zwischen mehreren vordefinierten Funktionen (1,2,...,m) ausgewählt werden kann, im Verlauf der Initialisierung eine auf den Einsatzort bezogene Funktion zugewiesen und in einen nichtflüchtigen Speicher eingetragen wird.

5. Verfahren nach Anspruch 1 **dadurch gekennzeichnet**, daß das primäre Steuergerät (11), bei dem zwischen mehreren vordefinierten Funktionen ausgewählt werden kann, im Anschluß an die Initialisierung der sekundären Steuergerate (12.1 bis 12.n) sich selbst eine Funktion zuweist und in einen nichtflüchtigen Speicher einträgt, indem Informationen über die Systemkonfiguration wie Anzahl, Einsatzort und/oder eingestellte Funktionen der zuvor initialisierten sekundären Steuergeräte ausgewertet werden.

6. Verfahren nach Anspruch 1, **dadurch gekennzeichnet**, daß auf Abfrage des Initialisierungsstatus ein sekundäres Steuergerät (aus 12.1 bis 12.n) einen Betriebszustand logisch "1" bzw. "0" meldet, je nachdem ob es bereits initialisiert wurde oder nicht und das elektronische Regelsystem (10) solange nicht in Betrieb genommen werden kann, wie sich ein sekundäres Steuergerät noch im Betriebszustand logisch "0" befindet.

7. Verfahren nach Anspruch 1, **dadurch gekennzeichnet**, daß der Informationsaustausch zwischen der Vorrichtung zur Einsatzortdiagnose und dem primären Steuergerät (11) des elektronischen Regelsystems (10) über eine Diagnosesteckdose (17) im Fahrzeug erfolgt.

8. Anwendung des Verfahrens nach Anspruch 1 auf ein elektropneumatisches Bremssystem in einem Fahrzeug, wobei Radmodulatoren mit integrierter Steuerelektronik den Funktionsbausteinen (13.1 bis 13.n) mit zugeordneten sekundären Steuergeräten (12.1 bis 12.n) entsprechen.

9. Anwendung des Verfahrens nach Anspruch 1 auf die Signal- und Scheinwerfereinrichtung in einem Fahrzeug, wobei relaisgeschaltete Leuchten den Funktionsbausteinen (12.1 bis 12.n) entsprechen.

## Claims

1. Method for initialising an electronic control system, in particular in a motor vehicle, consisting of a primary control device (11) and several secondary control devices (12.1 to 12.n) connected downstream, each of which is assigned to a function module, in which all control devices can exchange information through a data system, in particular a data bus, in which, in order to implement the method, the primary control device is activated to perform a programme-driven routine of successive selective initialisations of all secondary control devices, **characterised in that** each function module (from 13.1 to 13.n) is activated to perform a pre-defined action which is located with the aid of an external operating location diagnosis, whereupon the discrete operating location of the function module or the assigned secondary control device is transmitted to the primary control device.

2. Method as claimed in claim 1, **characterised in that** after transmitting the operating location of a function module (from 13.1 to 13.n) to the assigned secondary control device (from 12.1 to 12.n), the primary control device (11) allocates a system address related to the operating location.

3. Method as claimed in claim 2, **characterised in that** an allocated system address is entered in a non-volatile memory in a secondary control device (from 12.1 to 12.n).

4. Method as claimed in claim 1, **characterised in that** during the course of initialisation a function related to the operating location is allocated to the secondary control devices (12.1 to 12.n), in which a selection can be made from several predefined functions (1, 2,...m.), and entered in a non-volatile memory.

5. Method as claimed in claim 1, **characterised in that** in conjunction with initialisation of the secondary control devices (12.1 to 12.n), the primary control device (11), in which a selection can be made from among several predetermined functions, allocates itself a function which it stores in a non-volatile memory, whereby data pertaining to the system configuration, such as number, operating location and/or installed functions set up for the previously initialised secondary control devices are evaluated.

6. Method as claimed in claim 1, **characterised in that** when queried for an initialisation status, a secondary control device (from 12.1 to 12.n) logically indicates an operating status "1" or "0", depending on whether it has already been initialised or not, and the electronic control system (10) cannot be brought into operation whilst a secondary control device is still logically showing the operating status "0".

7. Method as claimed in claim 1, **characterised in that** the exchange of data between the operating location diagnostics device and the primary control device (11) of the electronic control system (10) takes place via a diagnostics outlet (17) in the motor vehicle.

8. Application of the method of claim 1 to an electropneumatic brake system in a motor vehicle, whereby wheel regulators with integrated control electronics correspond to the function modules (13.1 to 13.n) with assigned secondary control devices (12.1 to 12.n).

9. Application of the method as claimed in claim 1 to the signalling and headlamp device in a motor vehicle, whereby relay-switched lamps correspond to the function modules (12.1 to 12.n).

## Revendications

1. Procédé pour initialiser un système de régulation électronique, notamment dans un véhicule automobile, constitué par un appareil de commande primaire (11) et plusieurs appareils de commande secondaires (12.1 à 12.n) branchés en aval et associés chacun à un module fonctionnel, tous les appareils de commande pouvant échanger des informations par l'intermédiaire d'un système de transmission d'informations, notamment un bus de transmission de données, et selon lequel pour la mise en oeuvre du procédé, l'appareil de commande primaire est activé pour une exécution successive, commandée par programme, d'initialisations sélectives de tous les appareils de commande secondaires, caractérisé en ce que respectivement un module fonctionnel (parmi 13.1 à 13.n) est excité pour une action prédéfinie, qui est localisée à l'aide d'un diagnostic externe de l'emplacement d'installation, à la suite de quoi l'emplacement d'installation discret du module fonctionnel ou de l'appareil de commande secondaire associé est transmis à l'appareil de commande primaire.

2. Procédé selon la revendication 1, caractérisé en ce qu'après la retransmission de l'emplacement d'installation d'un module fonctionnel (parmi 13.1 à 13.n), l'appareil de commande primaire (11) affecte une adresse du système, rapportée à l'emplacement d'utilisation, à l'appareil de commande secondaire associé (parmi 12.1 à 12.n).

3. Procédé selon la revendication 2, caractérisé en ce que dans un appareil de commande secondaire (parmi 12.1 à 12.n), une adresse affectée du système est introduite dans une mémoire non volatile.

4. Procédé selon la revendication 1, caractérisé en ce que, au cours de l'initialisation, une fonction rapportée à l'emplacement d'installation est affectée aux appareils de commande secondaire (12.1 à 12.n), dans lesquels une sélection peut être exécutée entre plusieurs fonctions prédéfinies (1, 2, ... m), et est introduite dans une mémoire non volatile.

5. Procédé selon la revendication 1, caractérisé en ce que l'appareil de commande primaire (11), dans lequel une sélection peut être effectuée entre plusieurs fonctions prédéfinies, affecte à lui-même une fonction, à la suite de l'initialisation des appareils de commande secondaires (12.1 à 12.n) et l'introduit dans une mémoire non volatile, par le fait que des informations concernant la configuration du système, tels que le nombre, l'emplacement d'installation et/ou des fonctions réglées des appareils de commande secondaire préalablement initialisés sont évaluées.

6. Procédé selon la revendication 1, caractérisé en ce que lors de l'interrogation de l'état d'initialisation, un appareil de commande secondaire (parmi 12.1 à 12.n) signale un état de fonctionnement "1" ou "0" logique, selon qu'il a déjà été initialisé ou non, et le système de régulation électronique (10) ne peut pas être mis en fonctionnement tant qu'un appareil de commande secondaire est encore situé dans l'état de fonctionnement "0" logique.

7. Procédé selon la revendication 1, caractérisé en ce que l'échange d'informations entre le dispositif de diagnostic d'emplacements d'utilisation et l'appareil de commande primaire (11) du système de régulation électronique (10) s'effectue par l'intermédiaire d'une prise de diagnostic (17) dans le véhicule.

8. Utilisation du procédé selon la revendication 1 dans un système de freinage électropneumatique dans un véhicule, des modulateurs de roues comportant un système électronique intégré de commande correspondant au module fonctionnel (13.1 à 13.n) auquel sont associés des appareils de commande secondaires (12.1 à 12.n).

9. Utilisation du procédé selon la revendication 1 dans l'installation des feux de signalisation et des phares dans un véhicule, auquel cas des lampes commandées par des relais correspondent aux modules fonctionnels (12.1 à 12.n).
